(19) Europäisches Patentamt
European Patent Office
Office européen des brevets

(11) **EP 4 015 487 A1**

(12) **EUROPÄISCHE PATENTANMELDUNG**

(43) Veröffentlichungstag:
**22.06.2022 Patentblatt 2022/25**

(21) Anmeldenummer: **21214386.1**

(22) Anmeldetag: **14.12.2021**

(51) Internationale Patentklassifikation (IPC):
**C04B 38/10** (2006.01)  **C04B 28/02** (2006.01)

(52) Gemeinsame Patentklassifikation (CPC):
(C-Sets verfügbar)
**C04B 28/02; C04B 38/106;** C04B 2111/28  (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.12.2020 DE 102020134308**

(71) Anmelder: **Technische Universität Darmstadt**
**64289 Darmstadt (DE)**

(72) Erfinder:
• **MANKEL, Christoph**
**63454 Hanau (DE)**
• **CAGGIANO, Antonio**
**64285 Darmstadt (DE)**
• **KOENDERS, Eduardus**
**64287 Darmstadt (DE)**

(74) Vertreter: **LifeTech IP**
**Spies & Behrndt Patentanwälte PartG mbB**
**Elsenheimerstraße 47a**
**80687 München (DE)**

(54) **HYBRIDWERKSTOFF FÜR WÄRMEDÄMMUNG**

(57)     Ein Hybridwerkstoff (100) für eine Wärmedämmung, der Hybridwerkstoff (100) umfasst ein Zementmaterial (110), das eine Vielzahl von mit einem Gas gefüllten Blasen (120) umschließt, und eine Vielzahl von ein Phasenwechselmaterial enthaltenden Mikrokapseln (130), die in das Zementmaterial (110) eingelagert sind. Dabei umfasst das Zementmaterial (110) ein Proteinmaterial und Zement und weist eine höhere Wärmeleitfähigkeit als das Gas auf, um Wärme so zu den Mikrokapseln (130) zu führen. Das Phasenwechselmaterial ist ausgebildet, um bei Zufuhr von Wärme als Wärmespeicher zu dienen und so die spezifische Wärmekapazität des Hybridwerkstoffs (100) zu erhöhen.

Fig. 1

EP 4 015 487 A1

(52) Gemeinsame Patentklassifikation (CPC): (Forts.)

C-Sets
**C04B 28/02, C04B 20/10, C04B 24/14,
C04B 38/106, C04B 2103/0071;
C04B 38/106, C04B 7/02, C04B 20/0036,
C04B 24/14, C04B 2103/0071;
C04B 38/106, C04B 7/02, C04B 20/10,
C04B 24/14, C04B 2103/0071**

**Beschreibung**

Die vorliegende Erfindung bezieht sich auf einen Hybridwerkstoff für eine Wärmedämmung, ein Dämmelement und ein Wärmedämmverbundsystem, die den Hybridwerkstoff aufweisen, ein Verfahren zur Herstellung des Hybridwerkstoffs, und insbesondere auf einen thermischen Energiespeicherschaum.

HINTERGRUND

Die normative Beurteilung des Wärmeschutzes von Bauteilen erfolgt derzeit in der Regel unter stationären Randbedingungen nur über die Wärmeleitfähigkeit und die Schichtdicke der verwendeten Baustoffe. Diesem vereinfachten Ansatz liegt die Annahme konstanter Außen- und Innentemperaturen zugrunde. Zyklische Temperaturrandbedingungen, wie z. B. ein realer Tag-Nachtwechsel, erfordern zusätzlich eine Betrachtung des Wärmespeichervermögens der Baustoffe. Das Wärmespeichervermögen ist von den Materialparametern spezifische Wärmekapazität und Rohdichte abhängig. Je größer das Wärmespeichervermögen eines Materials ist, desto länger benötigt dieses, um sich aufzuwärmen oder abzukühlen.

Infolge instationärer Klimarandbedingungen sind die Temperaturverteilung innerhalb eines Bauteils und der entstehende Wärmeaustausch ein zeitabhängiges Phänomen. Das Fortschreiten einer Temperaturwelle kann mit der Temperaturleitzahl beschrieben werden. Sie bildet den Quotienten aus Wärmeleitfähigkeit und Wärmespeichervermögen. Eine kleine Temperaturleitzahl bedeutet ein langsames Fortschreiten einer Temperaturwelle und eine Verzögerung des Temperaturdurchgangs durch ein Bauteil. Je langsamer eine Temperaturwelle durch eine Konstruktion hindurch geht, umso langsamer kühlt diese aus und umso höher ist der winterliche Wärmeschutz. Gleichzeitig eignen sich Materialien mit kleiner Temperaturleitzahl ideal für den sommerlichen Wärmeschutz. Durch langsames Aufheizen der Baustoffe können hohe Temperaturspitzen im Sommer effizient abgefangen werden und die Behaglichkeit von Aufenthaltsräumen gesteigert werden. Aus bauphysikalischer Sicht sind folglich Baustoffe mit geringer Wärmeleitfähigkeit bei gleichzeitig hoher spezifischer Wärmekapazität und Rohdichte von besonderer Bedeutung.

Im Bereich der Wärmedämmung von Gebäuden ist dazu bekannt, in einen Baustoff wie beispielsweise Zement ein Material einzubetten, das mit der natürlichen Veränderung der Umgebungstemperatur einen Phasenübergang durchführt. Dabei speichert dieses Phasenwechselmaterial (phase change material, PCM) Wärmeenergie in Form von latenter Wärme.

Dieses Vorgehen findet sich bereits beispielsweise in Patent US 4,259,401, das ein Bauelement offenbart, in das PCM in eine poröse Matrix eingebettet sind. Hierzu werden Zement, Sand, ein Verschlussmaterial, Wasser und ein PCM vermischt und in eine Form gegossen, die dann aushärtet.

Eine Weiterentwicklung dieses Vorgehens ist im Patent US 8,070,876 B1 offenbart. Hierbei wird PCM in Mikrokapseln (MPCM) in eine Matrix aus einem stützenden Zementgemisch eingebracht, das aufgeschäumt wird. Ein weiteres ähnliches Beispiel findet sich in Patent KR 10-2019-0000551 A. Den vorangehenden Wärmedämmstoffen ist insbesondere gemeinsam, dass die das PCM enthaltende Matrix dem Bauteil eine tragende Wirkung verleiht.

Die Verbesserung der Eigenschaften von Wärmedämmstoffen stellt eine andauernde Herausforderung dar. Es besteht daher ein Bedarf nach einem verbesserten Wärmedämmstoff, insbesondere zur Wärmedämmung von Gebäuden.

KURZBESCHREIBUNG DER ERFINDUNG

Ein Wärmedämmstoff mit verbesserten Eigenschaften wird durch einen Hybridwerkstoff nach Anspruch 1, ein Dämmelement nach Anspruch 4, ein Wärmedämmverbundsystem nach Anspruch 5, ein Verfahren nach Anspruch 6 und ein Computerprogrammprodukt nach Anspruch 7 erreicht. Die abhängigen Ansprüche beziehen sich auf vorteilhafte Weiterbildungen der Gegenstände der unabhängigen Ansprüche.

Die vorliegende Erfindung bezieht sich auf einen Hybridwerkstoff für eine Wärmedämmung. Der Hybridwerkstoff umfasst ein Zementmaterial, das eine Vielzahl von mit einem Gas - insbesondere Luft - gefüllten Blasen bzw. Poren oder Kavitäten umschließt, und eine Vielzahl von ein Phasenwechselmaterial enthaltenden Mikrokapseln, die in das Zementmaterial, das die Wände der Blasen bildet, eingelagert sind. Das Phasenwechselmaterial bzw. die Mikrokapseln befinden sich vorteilhafterweise insbesondere nicht in den Blasen. Ein Durchmesser der Mikrokapseln ist wesentlich kleiner als ein mittlerer Durchmesser der Blasen. Das Zementmaterial weist eine höhere Wärmeleitfähigkeit als das Gas bzw. die Luft auf. Auf diese Weise wird Wärme, die sich hauptsächlich entlang des Zementmaterials in den Zwickelzonen zwischen den Blasen ausbreitet, gezielt zu den Mikrokapseln geführt. Das in den Mikrokapseln enthaltene Phasenwechselmaterial ist ausgebildet, um bei Zufuhr von Wärme als Wärmespeicher zu dienen und so die spezifische Wärmekapazität des Hybridwerkstoffs zu erhöhen.

Das Zementmaterial umfasst vorteilhafterweise hauptsächlich Zement, neben einem Protein, das in einem Herstellungsprozess zur Bildung der Blasen dient. Es kann daher beispielsweise Kalkstein und Ton enthalten, weist jedoch insbesondere keine Gesteinskörnung auf. Das Zementmaterial ist insbesondere nicht ein Beton. Nur auf diese Weise sind für den vorgestellten Hybridwerkstoff die erwünschten Eigenschaften Leichtigkeit bzw. geringe Dichte, Dämmwirkung gegen Wärmetransport sowie Wärmekapazität in erfindungsgemäßem Maß zu erreichen.

Optional enthält das Phasenwechselmaterial und/oder eine Mikrokapsel eines oder mehrere der folgenden Materialien: ein Paraffin bzw. ein Kohlenwasserstoff-Material, eine Fettsäure bzw. ein Lipid, ein Alditol bzw. einen Zuckeralkohol, ein anorganisches Hydrat, insbesondere von Mangan, Stickstoff und/oder Kupfersulfat, und in der Mikrokapsel ein Acryl bzw. ein Acrylpolymer oder Polyakrylat, oder ein anderes Polymerharz. Die Hüllen der Mikrokapseln können auch biobasiert oder mineralisiert sein.

Optional beträgt ein Volumenanteil an mikroverkapseltem Phasenwechselmaterial in dem Zementleim 30%, oder der Volumenanteil liegt zwischen 20% und 40%.

Ausführungsbeispiele beziehen sich auch auf ein Dämmelement für eine Wärmedämmung, wobei das Dämmelement den Hybridwerkstoff nach einem der vorhergehenden Ansprüche aufweist und für eine Verwendung in einem der folgenden Gegenstände vorgesehen ist: in einem Gebäude, in einem Fahrzeug, in einem Ofen und/oder in einem Schornstein. Für die Verwendung in einem Gebäude kann das Dämmelement in Form einer vorgefertigten Dämmplatte vorliegen und dabei insbesondere auch mit einer tragenden Struktur - beispielsweise einer Beton- oder Stahlbetonplatte - verbindbar sein. Für die Verwendung in einem Gebäude kann das Dämmelement auch während des Bauvorgangs durch Gießen oder Spritzgießen in einen dazu vorgesehenen Hohlraum gewonnen werden. Für die Verwendung in einem der weiteren aufgezählten Gegenstände können Ausführungsformen des Hybridwerkstoffs vorteilhafterweise bis in einen Temperaturbereich von 200°C bis 300°C eingesetzt werden.

Ausführungsbeispiele beziehen sich weiter auf ein Wärmedämmverbundsystem für eine Wärmedämmung eines Gebäudes, wobei das Wärmedämmverbundsystem ein Dämmelement wie etwa die vorangehend beschriebene Dämmplatte aufweist, das den Hybridwerkstoff umfasst. Das Wärmedämmverbundsystem kann insbesondere ausgebildet sein, um an einer tragende Struktur, etwa eine Betonplatte, appliziert bzw. befestigt zu werden.

Ausführungsbeispiele beziehen sich weiter auf ein Verfahren zur Herstellung eines Hybridwerkstoffs für eine Wärmedämmung. Das Verfahren umfasst die folgenden Schritte:

Produzieren eines wässerigen Schaums, der ein Protein enthält;

Ansetzen eines Zementleims, basierend auf Wasser und Zement;

Vermischen des Zementleims mit einer Vielzahl von ein Phasenwechselmaterial enthaltenden Mikrokapseln, so dass eine homogene erste Mischung entsteht;

Vermischen der ersten Mischung mit dem wässerigen Schaum, so dass eine homogene zweite Mischung entsteht;

Gießen der homogenen zweiten Mischung in eine Form;

Trocknen der in die Form gegossenen zweiten Mischung, um so den Hybridwerkstoff herzustellen.

Hierbei weist ein Ausgangsmaterial für das Produzieren des wässerigen Schaums bzw. das Aufschäumen insbesondere Wasser auf, in dem die Proteine gelöst oder suspendiert vorliegen können. Proteinbasierte Schaumbildner sind im Stand der Technik bekannt und weisen oft eine Vielzahl von Aminosäuren als Proteinhydrolisat auf. Der Zementleim umfasst hauptsächlich Zement und Wasser. Er kann daher beispielsweise Kalkstein und Ton sowie Hilfsstoffe enthalten, umfasst jedoch keine Gesteinskörnung. Der Zementleim härtet somit lediglich zu dem Zementmaterial des Hybridwerkstoffs aus, jedoch insbesondere nicht zu Beton. Auf diese Weise sind für den vorgestellten Hybridwerkstoff die erwünschten Eigenschaften Leichtigkeit bzw. geringe Dichte, Dämmwirkung gegen Wärmetransport sowie Wärmekapazität in erfindungsgemäßem Maß zu erreichen.

Ausführungsformen des vorgestellten Verfahrens beziehen sich auch auf ein Computerprogrammprodukt mit darauf gespeichertem Softwarecode, der zur Ausführung durch eine datenverarbeitende Maschine vorgesehen ist, um so das Verfahren durchzuführen.

Gemäß weiteren Ausführungsbeispielen sollen die Begriffe wie folgt definiert sein. Unter dem Begriff des Hybridwerkstoffs soll ein Material in festem Aggregatszustand verstanden werden, aus dem Bauteile und Konstruktionen insbesondere von Gebäuden hergestellt werden können, die für eine Wärmedämmung geeignet sind. Unter dem Begriff Zementmaterial soll ein Material verstanden werden, das Zement umfasst. Das Zementmaterial kann weitere Bindemittel (bspw. Kalkstein und/oder Ton) und ein Proteinmaterial aufweisen, jedoch keine Gesteinskörnung. Insbesondere ist das Zementmaterial kein Beton. Das Trocknen im vorangehend beschriebenen Verfahren soll sich auf das Erhärten des flüssigen Werkstoffs beziehen. Darunter soll somit auch eine Hydratation verstanden werden.

Ein Zweck des hier vorgestellten Hybridwerkstoffs besteht darin, durch eine Dämmung möglichst viel Energie etwa zur Raumheizung bzw. -kühlung einzusparen. Diesen Zweck erreicht der vorgestellte Hybridwerkstoff bereits bei einer geringen Dicke (unterhalb von 10 cm) der Dämmung. Gleichzeitig ist der Hybridwerkstoff kostengünstig, haltbar und in der Herstellung einfach. Die geringe Dämmschichtdicke ist vorteilhaft, um Platz einzusparen und somit beispielsweise mehr Nutzfläche zu erlauben. Bisherige Dämmstoffe verlangen hingegen in der Regel eine relativ hohe Dämmschichtdicke (etwa zwischen 12 cm und 30 cm).

Aus technischer Sicht wird die Leistung der Dämmung durch den sogenannten Wärmeleitkoeffizienten angegeben. Dieser soll möglichst gering sein. Bei konstanter Temperaturdifferenz zwischen außen und innen ist somit der Dämmstoff mit dem geringsten Wärmeleitkoeffizienten der beste. Da im Realfall die Außentemperaturen (vor allem in unseren Breitengraden) über den Tagesverlauf schwanken, wird eine zweite Größe wichtig, die Wärmekapazität des Dämmstoffes, d.h. das Wärmespeichervermögen. Ist die Wärmekapazität hoch, kann der Dämmstoff mehr Wärme speichern, was den Wärmeschutz erhöht.

Der vorgestellte Hybridwerkstoff ist ein mineralischer Schaum, in den mikroverkapselte Phasenwechselmaterialien eingebracht sind, welche die Wärmeenergie speichern können. Der mineralische Schaum wird mit Hilfe eines Proteinschaums (vergleichbar zu Rasierschaum) und Zugabe des Zementleims als mineralischem Baustoff hergestellt. Zentraler Vorteil des hier vorgestellten Hybridwerkstoffes besteht in seinen vorzüglichen Wärmedämmeigenschaften, seiner Leichtigkeit bzw. geringen Dichte, und in der einfachen Verfügbarkeit seiner Komponenten. So sind für Ausführungsbeispiele des Hybridwerkstoffs spezifische Dichten (im Vergleich zu Wasser) von unter 0.35 und bis 0.1 erreichbar. Die Porosität liegt in der Regel über 70%; vorteilhafterweise liegt sie bei 85% bis 90% Luftanteil. Der vorgestellte Hybridwerkstoff bietet so unter anderem folgende Vorteile:

- aus dem Hybridwerkstoff hergestellte Dämmelemente sind sehr leicht,

- bei gleicher Dämmwirkung lässt sich (gegenüber Dämmstoffen auf der Basis von expandiertem Polystyrol, EPS) 40% Dickeneinsparung, bzw. bei gleicher Dicke eine um 40% verbesserte Dämmleistung erreichen,

- der Hybridwerkstoff führt auf etwa 20% $CO_2$-Ersparnis und kann insbesondere bei einer Verwendung eines geeigneten Phasenwechselmaterials ökologisch schonend abgebaut werden,

- ein Dämmelement, insbesondere für ein Gebäude, lässt sich auch direkt vor Ort gießen, so dass zusätzliche Gestaltungsfreiheit erreicht wird.

KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.

Fig. 1    zeigt Aspekte eines Ausführungsbeispiels des vorgestellten Hybridwerkstoffs,

Fig. 2    zeigt weitere Aspekte eines Ausführungsbeispiels des vorgestellten Hybridwerkstoffs,

Fig. 3    zeigt eine zweidimensionale Simulation einer Zwickelzone zur Darstellung eines Wärmestromverlaufs,

Fig. 4    zeigt eine Wärmekapazitätsverlauf aus einer dynamischen Differenzkalorimetrie für ein Phasenwechselmaterial,

Fig. 5    zeigt ein Resultat einer Simulation des Hybridwerkstoffs im Vergleich zu einer bekannten Dämmschicht,

Fig. 6    illustriert eine Anwendung des Hybridwerkstoffs in einem Wärmedämmverbundsystem für ein Gebäude,

Fig. 7    illustriert eine weitere Anwendung des Hybridwerkstoffs in einem Wärmedämmverbundsystem für ein Gebäude,

Fig. 8    zeigt Schritte eines Verfahrens zur Herstellung des Hybridwerkstoffs,

Fig. 9    illustriert Schritte des Verfahrens.

DETAILLIERTE BESCHREIBUNG

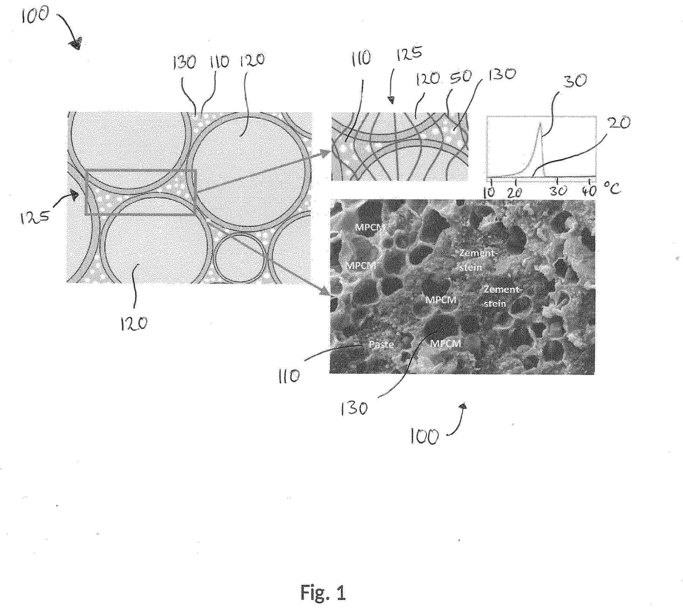

**Fig. 1** zeigt Aspekte eines Ausführungsbeispiels eines Hybridwerkstoffs 100. Dargestellt ist auf der linken Seite eine schematische, vergrößerte Ansicht des Hybridwerkstoffs 100. Der Hybridwerkstoff 100 dient einer Wärmedämmung. Er umfasst ein Zementmaterial 110, das eine Vielzahl von mit einem Gas gefüllten Blasen 120 bzw. Poren umschließt und so einen festen Zementschaum bildet. Das Zementmaterial 110 weist Zement und Proteine auf. Es umfasst zudem eine Vielzahl von ein Phasenwechselmaterial (PCM) enthaltenden Mikrokapseln 130 (mikroverkapseltes PCM, MPCM). Das Zementmaterial 110 weist eine höhere Wärmeleitfähigkeit als das Gas auf, und ist dadurch ausgebildet, um Wärme zu den Mikrokapseln 130 zu leiten. Untersuchungen haben ergeben, dass Wärme überwiegend in Form von Wärmeleitung in den sogenannten Zwickelzonen 125 zwischen den Blasen 120 transportiert wird. Dieser Effekt wird durch den Hybridwerkstoff 100 gezielt genutzt. Materialstege aus Zementmaterial 110 werden als Trägermatrix für MPCM 130 genutzt. Das Phasenwechselmaterial ist ausgebildet, um bei Zufuhr von Wärme als Wärmespeicher zu dienen und so die spezifische Wärmekapazität des Hybridwerkstoffs zu erhöhen. Der geringe Wärmedurchlasswiderstand der dichten Zementsteinstege sowie die Übergangszonen zwischen der dem Zementmaterial 110 bzw. der Trägermatrix und den Blasen 120 bzw. Luftporen bilden zusammen eine thermische Brücke und leiten die Wärmeenergie direkt zu den eingebetteten MPCM 130, sodass diese in den Phasenwechsel übergehen können, um eine hohe Menge an Wärmeenergie zu speichern. Durch die Kombination der hohen Wärmespeicherfähigkeit der MPCM 130 in den Zwickelzonen 125 und der hoch dämmenden Eigenschaften der eingeschlossenen Luftporen 120 bietet der Hybridwerkstoff 100 einen bauphysikalisch vorteilhaften Dämmstoff. Insgesamt weist der Hybridwerkstoff 100 eine geringe Wärmeleitfähigkeit und eine sehr hohe spezifische Wärmekapazität auf.

Auf der rechten Seite der Fig. 1 ist oben links eine nochmals vergrößerte Ansicht der Zwickelzone 125 mit Isothermen 50 dargestellt. Die räumlichen Abstände der Isothermen 50 sind in der Zwickelzone 125 bzw. dem Steg aus Zementmaterial 110 größer als im Inneren den Blasen 120. Dies illustriert die höhere Wärmeleitfähigleit der Zwickelzone 125 im Vergleich zu einer Wärmeleitfähigkeit der Blasen 120.

Auf der rechten Seite der Fig. 1 ist oben rechts ein Diagramm dargestellt, das zwei Wärmekapazitätsverläufe 20, 30 als Funktionen einer Umgebungstemperatur zeigt. Eine erster Wärmekapazitätsverlauf 20 zeigt die Wärmekapazität des Zementmaterials 110 ohne den MPCM 130 in Abhängigkeit der Umgebungstemperatur. Ein zweiter Wärmekapazitätsverlauf 30 zeigt die Wärmekapazität des Zementmaterials 120 mit den MPCM 130 in Abhängigkeit der Umgebungstemperatur. Der zweite Wärmekapazitätsverlauf 30 zeigt gegenüber dem ersten Wärmekapazitätsverlauf 20 eine deutlich erhöhte Wärmekapazität in einem Bereich der Umgebungstemperatur von 20°C bis 25°C an.

Auf der rechten Seite der Fig. 1 ist unten eine mikroskopische Aufnahme eines Bruchs des Hybridwerkstoffs 100 wiedergegeben. Sie zeigt den Bereich einer Zwickelzone 125 mit den Stellen, in denen MPCM in das Zementmaterial 110 der Zwickelzone 125 eingebettet sind. Die mikroskopische Aufnahme deckt eine Länge von ca. 26 Mikrometern und eine Höhe von ca. 18 Mikrometern ab.

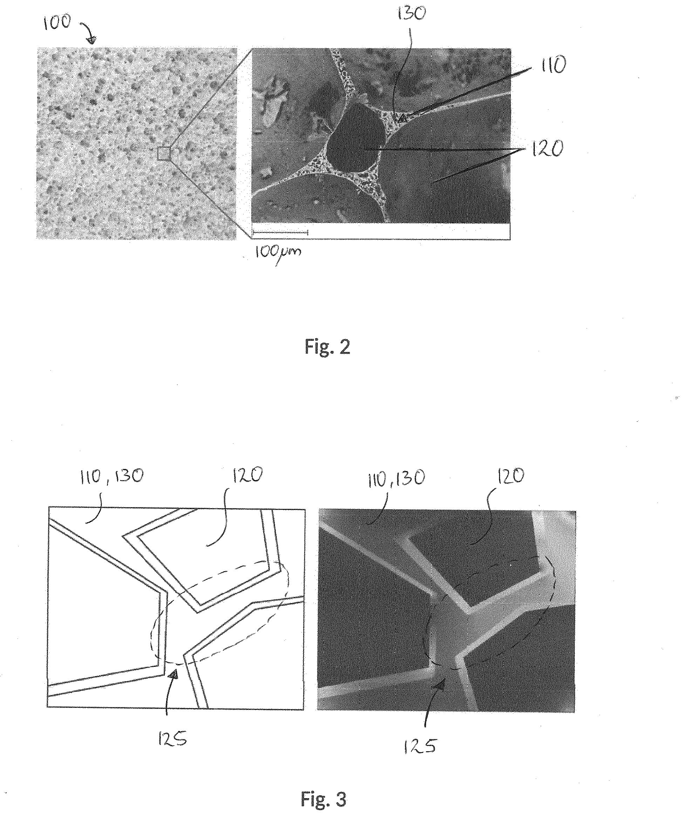

**Fig. 2** zeigt weitere Aspekte eines Ausführungsbeispiels des vorgestellten Hybridwerkstoffs 100. Die Figur zeigt auf der linken Seite eine Detailaufnahme des Ausführungsbeispiels, sowie auf der rechten Seite eine Rasterelektronenmikroskopaufnahme eines Ausschnitts der linken Seite. Im vorliegenden Ausführungsbeispiel weist der Hybridwerkstoff 100 eine Rohdichte von 180 Kilogramm pro Kubikmeter auf. Zu sehen sind Blasen 120 bzw. Luftporen sowie das sie umgebende Zementmaterial 110. In der Rasterelektronenmikroskopaufnahme sind die im Zementmaterial 110 eingebetteten MPCM 130 zu sehen.

**Fig. 3** zeigt eine zweidimensionale Simulation einer Zwickelzone 125 zur exemplarischen Darstellung eines Wärmestromverlaufs. Dargestellt ist auf der linken Seite eine schematische Ansicht von Blasen 120, umgeben von Zementmaterials 110, das eingelagerte MPCM 130 umfasst. Auf der rechten Seite ist dieselbe Ansicht in einer Grautonschattierung dargestellt, die eine Verteilung von Wärme wiedergibt. Dabei stehen hellere Töne für wärmere Bereiche.

Die Übertragung der nötigen Wärmeenergie zur Veränderung des Aggregatzustandes des Phasenwechselmaterials erfolgt zunächst durch die Wärmeenergieübertragung von der Umgebung auf ein Bauteil, und dann über die PCM-Trägermatrix des Baustoffes auf die integrierten MPCM 130. Aufgrund der erhöhten effektiven Wärmeleitfähigkeit der dichten Zementsteinstege und der nanomodifizierten Übergangszonen ergibt sich in den Zwickelzonen 125 ein erhöhter Wärmestrom. Dieser Wärmestrom ermöglicht den Transport von Wärmeenergie zu den eingebetteten MPCM 130.

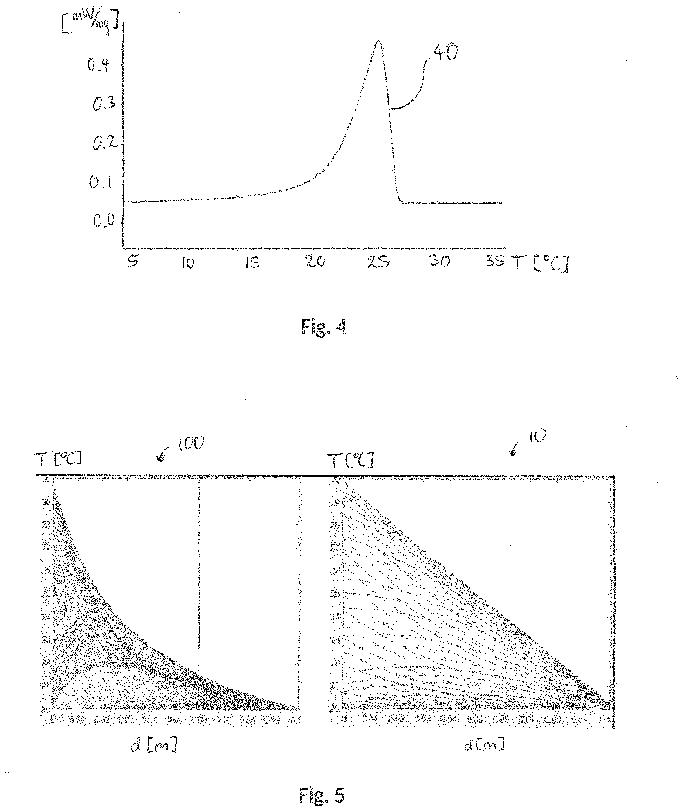

**Fig. 4** zeigt eine Wärmekapazitätskurve 40 aus einer dynamischen Differenzkalorimetrie für ein Phasenwechselmaterial auf Paraffinbasis. Die Größe, in Einheiten Milliwatt pro Milligramm, ist dargestellt in Abhängigkeit von einer Umgebungstemperatur in Grad Celsius.

Für den Hybridwerkstoff 100 können MPCM 130 auf Paraffinbasis oder auch beispielsweise Bio-PCM mit Schmelzpeaktemperaturen zwischen -5°C und 100°C verwendet werden. Diese weisen gut kontrollierbare physikalische Eigenschaften, wie z.B. hohe Kristallinität, Zyklenstabilität, keine Unterkühlung, nahezu keine Volumenzunahme während des Phasenwechsels und chemisch inertes Verhalten auf. Durch Paraffine oder Fettsäuren mit individuell steuerbaren Kettenlängen und anschließender Homogenisierung der Mischung können Enthalpiespitzen der PCM kontrolliert werden. Das für diese Figur verwendete mikroverkapselte Paraffin weist eine Wärmespeicherfähigkeit von ca. 100 kJ/kg in einem Temperaturbereich von +16°C bis +31°C auf. Das Peakmaximum der Wärmekapazitätskurve 40 für den Phasenwechsel fest/flüssig befindet sich bei etwa 25°C.

**Fig. 5** zeigt ein Resultat einer indikativen Simulation des Hybridwerkstoffs 100 im Vergleich zu einer bekannten, auf expandiertem Polystyrol (EPS) basierenden Dämmschicht 10. Dargestellt sind zwei Diagramme, links für den hier vorgestellten Hybridwerkstoff 100, rechts für die EPS-basierte Dämmschicht 10. In den Diagrammen sind jeweils mehrere Temperaturverläufe (einer Temperatur in Grad Celsius) durch eine 0.1 Meter dicke Schicht des jeweiligen Dämmstoffes zu sehen. Dabei befindet jeweils links (d=o) eine Außenseite, rechts (d=0.1) eine Innenseite eines Gebäudes. Auf der Außenseite schwankt eine Außentemperatur über den Verlauf eines Tages um 10°C zwischen 20°C und 30°C. Die Innenseite wird konstant auf einer Innentemperatur von 20°C gehalten. Jeder Temperaturverlauf gibt die Verteilung der Temperatur innerhalb der jeweiligen Dämmschicht zu einer bestimmten Zeit des Tages wieder.

Dabei sind sich aus den Kurven ergebende Wärmekapazitäten der beiden Dämmstoffe 100, 10 von Bedeutung. Diese sind folgender Tabelle zu entnehmen:

| Tag/Nacht ΔT = 10 K  Nacht/Tag ΔT = 10 K | Hybridwerkstoff 100, Schichtdicke 0,1 m | EPS-basierte Dämmschicht 10, |
|---|---|---|
| | | Schichtdicke = 0,1 m |
| Wärmespeicherkapazität [KJ/m2] | 1000 | 125 |
| Wärmespeicherkapazität [KWh/m2] | 2,8E-01 | 3,5E-02 |
| Jährliche Wärmespeicherkapazität | 245,3 | 30,7 |
| Wärmespeicherkapazitätsmultiplikator | 8 | 1 |

Insbesondere aufgrund der Zugabe von PCM (vorteilhafterweise etwa 30 % des Zementleimvolumens) in die Lamellen der Zementsteinskelettstruktur (bei einer Dichte $\rho$ = 180 kg/m3) weist der Hybridwerkstoff 100 gegenüber der EPS-Dämmschicht 10 eine deutlich verbesserte Wärmespeicherkapazität auf. Das dieser Figur zugrundeliegende Ausführungsbeispiel des Hybridwerkstoffs 100 zeigt eine bis zu ca. achtmal bessere Dämmleistung als der verglichene EPS-Dämmstoff 10. Die stark erhöhte Wärmespeicherkapazität führt zu einer deutlichen Leistungssteigerung des Hybridwerkstoffs 100 gegenüber dem herkömmlichen Dämmstoff 10. Zyklische Umgebungstemperaturen über einen Tagesverlauf hinweg wirken sich nur auf einen vorderen Längenabschnitt der Hybridwerkstoff-Dämmschicht aus, ohne das Innenklima zu beeinträchtigen.

Die hervorgerufene Temperaturwelle breitet sich nicht über die gesamte Materialdicke hinweg aus. Dies ermöglicht eine deutliche Reduzierung der Dämmdicke (ca. 40%) bei gleichzeitiger Verbesserung des Gebäudeinnenklimas.

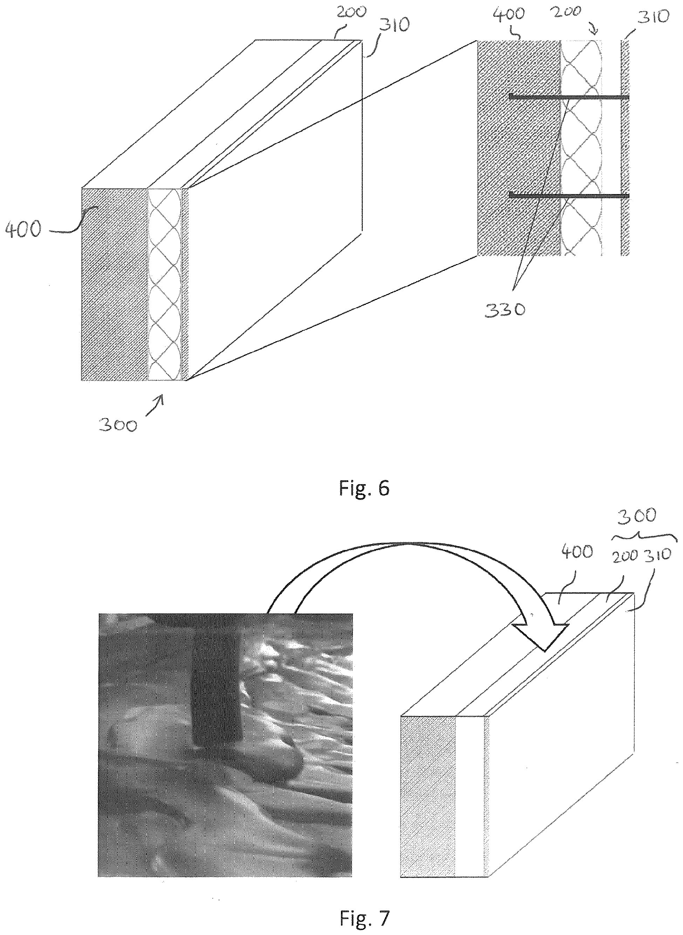

**Fig. 6** zeigt eine Prinzipskizze einer Anwendung des Hybridwerkstoffs 100 in einem Wärmedämmverbundsystem (WDVS) 300 für ein Gebäude. Zu sehen ist links eine perspektivische Ansicht des WDVS 300. Für das WDVS 300 sind hier beispielhaft zwei Schichten dargestellt. Zu einer Gebäudeaußenseite hin befindet sich ein Außenabschluss 310 (der beispielsweise ein Putzsystem umfasst). Auf der einem Gebäudeinneren zugewandten Seite des Außenabschlusses 310 befindet sich ein Dämmelement 200, das den Hybridwerkstoff 100 aufweist. Das Dämmelement 200 kann beispielsweise eine vorgefertigte Dämmplatte sein. Zur Gebäudeinnenseite hin ist das WDVS 300 mit einer tragenden Struktur 400 (beispielsweise aus Beton) verbunden. Das WDVS kann weitere Schichten bzw. weitere Unterteilungen der Schichten aufweisen, so etwa eine Klebe-, Dämm- und Armierungsschicht, Unter- und Oberputz als Außenabschluss sowie eine Farbbeschichtung.

Auf der linken Seite der Figur ist ein Querschnitt durch das WDVS 300 dargestellt. Die Verbindung des Hybridwerkstoffs 100 bzw. des Dämmelements 200 mit der tragenden Struktur 400 kann beispielsweise durch Klebung und gegebenenfalls Dübelung mit thermisch entkoppelten Ankern 330 erfolgen.

Das WDVS 300 kann vorteilhafterweise etwa zur energetischen Sanierung von Bestandsgebäuden herangezogen oder als wärmedämmende Gebäudehülle von Neubauten genutzt werden.

**Fig. 7** zeigt eine weitere Prinzipskizze einer Anwendung des Hybridwerkstoffs 100 in Form eines Wärmedämmverbundsystems (WDVS) 300 für ein Gebäude. Der Hybridwerkstoff 100 kann in frischem Zustand vor Ort gegossen werden. Dabei können beispielsweise klassische

Betonschalungssysteme und/oder verlorene Schalungssysteme zum Einsatz kommen, von denen eine exemplarische Skizze in der rechten Seite der Figur zu sehen ist. Der noch fließfähige Hybridwerkstoff 100, dargestellt in der fotographischen Abbildung auf der linken Seite der Figur, kann etwa über ein Schlauchsystem in die Schalung eingefüllt werden und härtet dort aus. Die Verbindung zur tragenden Struktur 400 kann über Stahlbügel erfolgen. Mit dieser Technik sind freie Formen vor Ort produzierbar, wodurch architektonisch anspruchsvolle Fassadensysteme mit optimalen Dämmeigenschaften erzielt werden können.

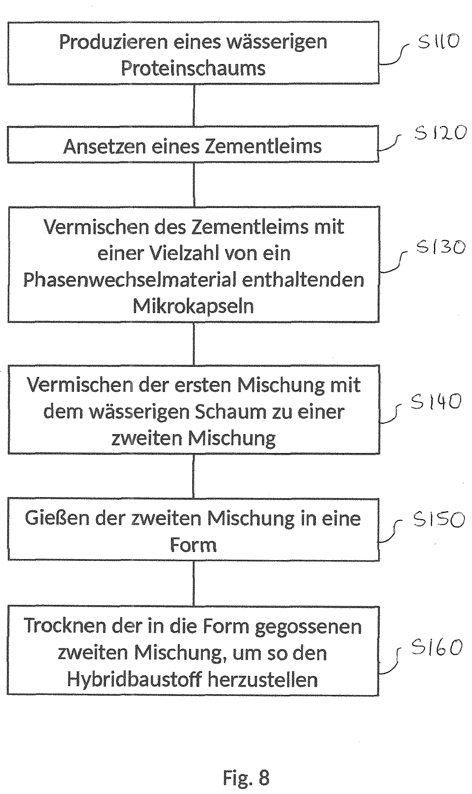

**Fig. 8** zeigt Schritte eines Verfahrens zur Herstellung eines Hybridwerkstoffs 100 für eine Wärmedämmung. Das Verfahren umfasst als einen Schritt ein Produzieren S110 eines wässerigen Schaums, der ein Protein enthält. Dabei wird Wasser mit dem Protein vermischt und aufgeschäumt. Ein weiterer Schritt umfasst ein Ansetzen S120 eines flüssigen Zementleims. Der Zementleim weist dabei Zement und Wasser, jedoch insbesondere keine Gesteinskörnung auf; er härtet somit insbesondere nicht zu einem Beton aus. Ein weiterer Schritt umfasst ein Vermischen S130 des Zementleims mit einer Vielzahl von ein Phasenwechselmaterial enthaltenden Mikrokapseln (MPCM) 130, so dass eine homogene erste Mischung entsteht. Ein weiterer Schritt umfasst ein Vermischen S140 der ersten Mischung mit dem wässerigen Schaum, so dass eine homogene zweite Mischung entsteht. Ein weiterer Schritt umfasst ein Gießen S150 der homogenen zweiten Mischung in eine Form. Dies kann eine Form zur Vorfabrikation eines Fertigbauteils, insbesondere etwa einer Dämmplatte für eine Gebäudeisolierung, sein. Ebenso kann das Gießen S150 auch vor Ort während eines Bauvorgangs erfolgen. Ein weiterer Schritt des Verfahrens umfasst ein Trocknen S160 der in die Form gegossenen zweiten Mischung, um so den Hybridwerkstoff 100 herzustellen.

Das hier beschriebene Verfahren kann ganz oder teilweise durch eine dazu geeignete datenverarbeitende Maschine durchgeführt werden. Ausführungsbeispiele beziehen sich auch auf ein Computerprogrammprodukt, das einen Softwarecode enthält, der durch eine solche Maschine verarbeitet werden kann, um so das vorangehend beschrieben Verfahren durchzuführen.

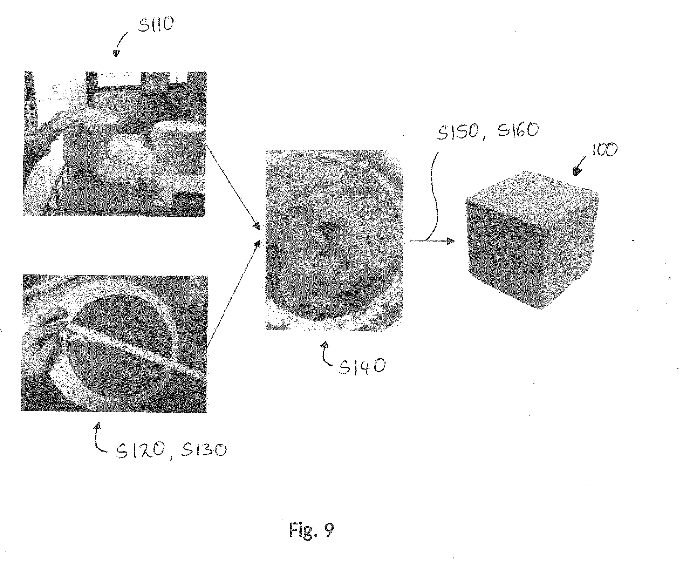

**Fig. 9** zeigt photographische Bilder zu Schritten des Verfahrens nach Fig. 8. Die Bilder illustrieren das Produzieren S110 des wässerigen Schaums, das Ansetzen S120 des flüssigen Zementleims und das Vermischen S130 des Zementleims mit den MPCM 130, den noch flüssigen Hybridwerkstoff nach dem Vermischen S140 des die MPCM 130 enthaltenden Zementleims mit dem wässerigen Schaum, sowie den fertiggestellten Hybridwerkstoff 100 nach dem Gießen S150 und Aushärten S160 in erhärtetem Zustand.

Die in der Beschreibung, den Ansprüchen und den Figuren offenbarten Merkmale der Erfindung können sowohl einzeln als auch in beliebiger Kombination für die Verwirklichung der Erfindung wesentlich sein.

BEZUGSZEICHENLISTE

| | |
|---|---|
| 10 | EPS-Dämmstoff |
| 20, 30, 40 | Wärmekapazitätsverläufe |
| 50 | Isotherme |
| 100 | Hybridwerkstoff |
| 110 | Zementmaterial |
| 120 | Blase bzw. Pore |
| 125 | Zwickelzone |
| 130 | mikroverkapseltes Phasenwechselmaterial, MPCM |
| 200 | Dämmelement |
| 300 | Wärmedämmverbundsystem, WDVS |
| 310 | Außenabschluss |
| 330 | Anker |
| 400 | tragende Struktur |
| S110, S120, ... , S160 | Schritte eines Verfahrens |

**Patentansprüche**

1. Ein Hybridwerkstoff (100) für eine Wärmedämmung, der Hybridwerkstoff (100) umfasst

ein Zementmaterial (110), das eine Vielzahl von mit einem Gas gefüllten Blasen (120) umschließt, und
eine Vielzahl von ein Phasenwechselmaterial enthaltenden Mikrokapseln (130), die in das Zementmaterial (110) eingelagert sind,
wobei das Zementmaterial (110) ein Proteinmaterial und Zement umfasst und eine höhere Wärmeleitfähigkeit als das Gas aufweist, um Wärme so zu den Mikrokapseln (130) zu führen, und
wobei das Phasenwechselmaterial ausgebildet ist, um bei Zufuhr von Wärme als Wärmespeicher zu dienen und so die spezifische Wärmekapazität des Hybridwerkstoffs (100) zu erhöhen.

**2.** Der Hybridwerkstoff (100) nach einem der vorhergehenden Ansprüche, wobei das Phasenwechselmaterial und/oder eine Mikrokapsel (130) eines oder mehrere der folgenden Materialien enthält:

- ein Paraffin,
- eine Fettsäure,
- ein Alditol,
- ein anorganisches Hydrat,
- ein Acryl,
- ein Polymerharz.

**3.** Der Hybridwerkstoff (100) nach einem der vorhergehenden Ansprüche, bei dem der Volumenanteil an Phasenwechselmaterial in dem Zementmaterial (110) 30% beträgt oder zwischen 20% und 40% liegt.

**4.** Ein Dämmelement (200) für eine Wärmedämmung, wobei das Dämmelement den Hybridwerkstoff (100) nach einem der vorhergehenden Ansprüche aufweist und für eine Verwendung in einem der folgenden Gegenstände vorgesehen ist:

- in einem Gebäude,
- in einem Fahrzeug,
- in einem Ofen,
- in einem Schornstein.

**5.** Ein Wärmedämmverbundsystem (300) für eine Wärmedämmung eines Gebäudes, wobei das Wärmedämmverbundsystem (300) ein Dämmelement (200) für ein Gebäude nach Anspruch 4 aufweist.

**6.** Ein Verfahren zur Herstellung eines Hybridwerkstoffs (100) für eine Wärmedämmung, das Verfahren umfasst

Produzieren (S110) eines wässerigen Schaums, der ein Protein enthält;
Ansetzen (S120) eines flüssigen Zementleims;
Vermischen (S130) des Zementleims mit einer Vielzahl von ein Phasenwechselmaterial enthaltenden Mikrokapseln (130), so dass eine homogene erste Mischung entsteht,
Vermischen (S140) der ersten Mischung mit dem wässerigen Schaum, so dass eine homogene zweite Mischung entsteht,
Gießen (S150) der zweiten Mischung in eine Form,
Trocknen (S160) der in die Form gegossenen zweiten Mischung, um so den Hybridwerkstoff (100) herzustellen.

Fig. 1

Fig. 2

Fig. 3

Fig. 4

Fig. 5

Fig. 6

Fig. 7

Produzieren eines wässerigen
Proteinschaums — S110

Ansetzen eines Zementleims — S120

Vermischen des Zementleims mit
einer Vielzahl von ein
Phasenwechselmaterial enthaltenden
Mikrokapseln — S130

Vermischen der ersten Mischung mit
dem wässerigen Schaum zu einer
zweiten Mischung — S140

Gießen der zweiten Mischung in eine
Form — S150

Trocknen der in die Form gegossenen
zweiten Mischung, um so den
Hybridbaustoff herzustellen — S160

Fig. 8

Fig. 9

Europäisches
Patentamt

European
Patent Office

Office européen
des brevets

**EUROPÄISCHER RECHERCHENBERICHT**

Nummer der Anmeldung

EP 21 21 4386

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | KR 2019 0000551 A (HANKYONG IND ACADEMIC COOPERATION CENTER [KR]) 3. Januar 2019 (2019-01-03) * Absätze [0004], [0006], [0023] – [0026], [0048] – [0051] * * Ansprüche 1-8 * | 1-6 | INV. C04B38/10 C04B28/02 |
| A | KR 2020 0006675 A (UNIV GACHON IND ACAD COOP FOUND [KR]) 21. Januar 2020 (2020-01-21) * Ansprüche 1-12 * | 1,6 | |
| A | CN 106 518 142 A (NANJING BEILIDA) 22. März 2017 (2017-03-22) * Ansprüche 1-9 * | 1,6 | |
| A | CN 109 485 365 A (LAN YUTAO) 19. März 2019 (2019-03-19) * Ansprüche 1-10 * | 1,6 | |
| A | WO 2011/071402 A1 (UNIV AVEIRO [PT]; SIMARIA DE OLIVEIRA LUCAS SANDRA MANUEL [PT] ET AL.) 16. Juni 2011 (2011-06-16) * Ansprüche 1-9 * | 1,6 | **RECHERCHIERTE SACHGEBIETE (IPC)** C04B |
| A | WO 2017/043983 A1 (POLITECHNIKA RZESZOWSKA IM IGNACEGO LUKASIEWICZA [PL]) 16. März 2017 (2017-03-16) * Ansprüche 1-17 * | 1,6 | |

-/--

Der vorliegende Recherchenbericht wurde für alle Patentansprüche erstellt

| Recherchenort | Abschlußdatum der Recherche | Prüfer |
|---|---|---|
| Den Haag | 3. Mai 2022 | Kolb, Ulrike |

EPO FORM 1503 03.82 (P04C03)

Seite 1 von 2

**EUROPÄISCHER RECHERCHENBERICHT**

Nummer der Anmeldung

**EP 21 21 4386**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SINGH RATHORE PUSHPENDRA KUMAR ET AL: "Potential of microencapsulated PCM for energy savings in buildings: A critical review", SUSTAINABLE CITIES AND SOCIETY, ELSEVIER, AMSTERDAM, NL, Bd. 53, 17. Oktober 2019 (2019-10-17), XP085995318, ISSN: 2210-6707, DOI: 10.1016/J.SCS.2019.101884 [gefunden am 2019-10-17] * das ganze Dokument * ----- | 1 | |
| A | Bojana Boh ET AL: "Microencapsulation technology and its applications in building construction materials Tehnologija mikrokapsuliranja in njena uporaba v gradbenih materialih", , 1. Januar 2008 (2008-01-01), Seiten 329-344, XP055108844, Gefunden im Internet: URL:http://www.rmz-mg.com/letniki/rmz55/RMZ55_0329-0344.pdf [gefunden am 2014-03-19] * das ganze Dokument * ----- | 1 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 3. Mai 2022 | Kolb, Ulrike |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 4386

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2022

| Im Recherchenbericht angeführtes Patentdokument | Datum der Veröffentlichung | Mitglied(er) der Patentfamilie | Datum der Veröffentlichung |
|---|---|---|---|
| KR 20190000551 A | 03-01-2019 | KEINE | |
| KR 20200006675 A | 21-01-2020 | KEINE | |
| CN 106518142 A | 22-03-2017 | KEINE | |
| CN 109485365 A | 19-03-2019 | KEINE | |
| WO 2011071402 A1 | 16-06-2011 | PT 104866 A<br>WO 2011071402 A1 | 14-06-2011<br>16-06-2011 |
| WO 2017043983 A1 | 16-03-2017 | PL 236030 B1<br>WO 2017043983 A1 | 30-11-2020<br>16-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4259401 A
- US 8070876 B1
- KR 1020190000551 A